Europäisches Patentamt

European Patent Office

Office européen des brevets

(19)

(11) Publication number: **0 056 296**
**B1**

## EUROPEAN PATENT SPECIFICATION

(12)

(45) Date of publication of patent specification: **19.03.86**

(21) Application number: **82300011.2**

(22) Date of filing: **04.01.82**

(51) Int. Cl.⁴: **G 11 B 17/02, G 11 B 23/02**

(54) Apparatus for connecting a disk pack to a disk drive.

(30) Priority: **12.01.81 US 224362**

(43) Date of publication of application:
**21.07.82 Bulletin 82/29**

(45) Publication of the grant of the patent:
**19.03.86 Bulletin 86/12**

(84) Designated Contracting States:
**DE FR GB**

(56) References cited:
**DE-A-1 815 482**
**DE-B-1 921 838**
**US-A-3 176 281**
**US-A-3 635 608**
**US-A-3 648 347**
**US-A-4 068 271**

(73) Proprietor: **MAGNETIC PERIPHERALS INC.**
**8100-34th Avenue South**
**Minneapolis Minnesota 55440 (US)**

(72) Inventor: **Elsing, John William**
**7202 Shannon Drive**
**Edina Minnesota 55435 (US)**

(74) Representative: **Caro, William Egerton et al**
**J. MILLER & CO. Lincoln House 296-302 High Holborn**
**London WC1V 7JH (GB)**

Courier Press, Leamington Spa, England.

## Description

This invention relates to apparatus for connecting disk packs to disk drives comprising: a hub arranged to carry one or more disks; a stub shaft axially mounted on said hub; a member having a passageway at one end for receiving said stub shaft; an annular groove in said passageway; recess means in said stub shaft having a shoulder; at least two balls movably disposed in relation to said member and said stub shaft and movable between a first position adapted to allow free movement of said stub shaft into and out of said passageway, and a second position adapted to capture said balls between the annular groove and the shoulder of the recess means to prevent said stub shaft from being withdrawn from said passageway; locking means for urging said balls into said second position after said stub shaft has been inserted into said passageway to a predetermined extent, and for locking said balls in said second position against a force tending to withdraw said stub shaft from said passageway; and, moving means for allowing said balls to move so that said stub shaft may be withdrawn from said passageway. Such apparatus is disclosed in United States Patent Specification No. 3176281 which relates to a compact portable memory package comprising a disk pack within a removable dust cover. The memory package is so constructed that the disk pack cannot be removed from a spindle of a disk drive unless the dust cover is in place and the dust cover cannot be removed from the disk pack unless the latter is locked onto the spindle. The disk pack has a threaded portion which is screwed onto the spindle so that a locking member on the latter moves to allow balls to disengage from a groove in a portion of the dust cover.

This U.S. specification is not directed to the problem which the present invention seeks to solve namely the connection of a disk pack to the spindle of a disk drive avoiding disadvantages such as clumsiness and slowness in handling, proneness for misalignment and undue complexity and expensiveness in design.

According to the present invention there is provided an apparatus of the type referred to above characterised in that said member is a spindle forming part of said disk drive, said annular groove having a shoulder so that in the second position the balls are captured between the shoulder of the annular groove and the shoulder of the recess means, and restoring force means mounted on the hub and connected to said stub shaft for providing a force tending to withdraw said stub shaft from the spindle when said stub shaft extends into said passageway said predetermined extent, the arrangement being such that, in operation, after insertion of the spindle, the stub shaft is urged further into the passageway by a force applied by an operator to the restoring force means so that the balls reach the annular groove, the restoring force means remaining tensioned when the balls are in the second position, and the

disk pack is disconnected from the spindle by operation of the moving means so that the force tending to withdraw the stub shaft from the spindle provided by the restoring force means causes the stub shaft to move to the first position.

According to one embodiment of the present invention there is provided an apparatus of the type referred to above characterised in that said two balls are mounted on said stub shaft in at least two recesses and movable between a first position where said balls are substantially completely received in said recesses and a second position wherein said balls extend a substantial distance beyond the exterior of the stub shaft; said locking means comprising a shaft axially movably mounted in a bore of said spindle and extending into said passageway to abut against said balls when said stub shaft is inserted into said passageway to said predetermined extent, said shaft having a cross-section which is less than the gap between said balls in their second position, biasing means being provided for biasing said shaft between said balls after they have moved into their second position, the shaft, in operation, acting to prevent movement of the balls from the second position to the first position to prevent the withdrawl of said stub shaft from said passageway, said moving means comprising means for withdrawing said shaft from between said balls.

The invention is illustrated, merely by way of example, in the accompanying drawings, in which:—

Figure 1 is a cross-sectional view of a disk pack and a disk drive spindle illustrating apparatus according to the present invention for connecting the disk pack to the disk drive;

Figure 2 is a view similar to Figure 1 illustrating a hub of the disk pack mounted on the spindle but not connected thereto;

Figure 3 is a view similar to Figure 2 illustrating the hub now connected to the spindle;

Figure 4 is a cross-sectional view illustrating another embodiment of an apparatus according to the present invention for connecting a disk pack to a disk drive;

Figure 5 shows an enlarged view of a slide member and ball of Figure 4; and

Figure 6 shows an enlarged partial cross-sectional view of part of the apparatus of Figure 4;

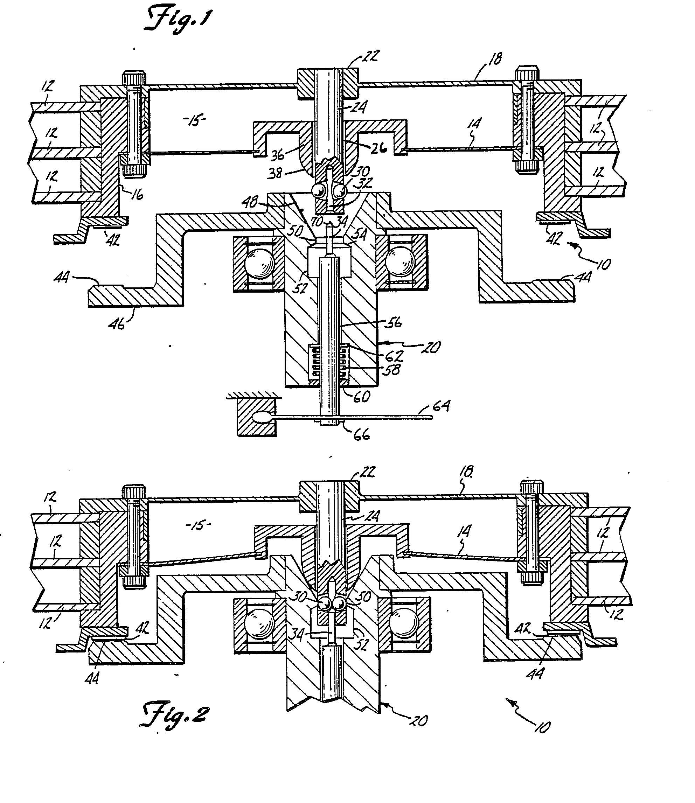

Figure 1 illustrates a disk pack 10 and a spindle 20 of a disk drive having apparatus according to the present invention for connecting the disk pack to the disk drive. Parts of the disk pack and disk drive not essential to an understanding of the present invention have been omitted from the drawings for clarity.

Referring first, to the disk pack 10, magnetisable disks 12 are mounted on a hub 16. When mounted on the spindle 20 of the disk drive, heads (not shown) extend towards the hub 16 to both write and read information on the disks 12 as is well-known.

Mounted on the hub 16 is a diaphragm 18 which is composed of a thin sheet of metal, such a aluminium, which may be deflected by a small force at a centre portion 22 thereof. When such a force is exerted on the portion 22 from the top of the disk pack 10, the diaphragm 18 deflects downwards toward a locating diaphragm 14. The locating diaphragm 14 spans a central bore 15 of the hub 16.

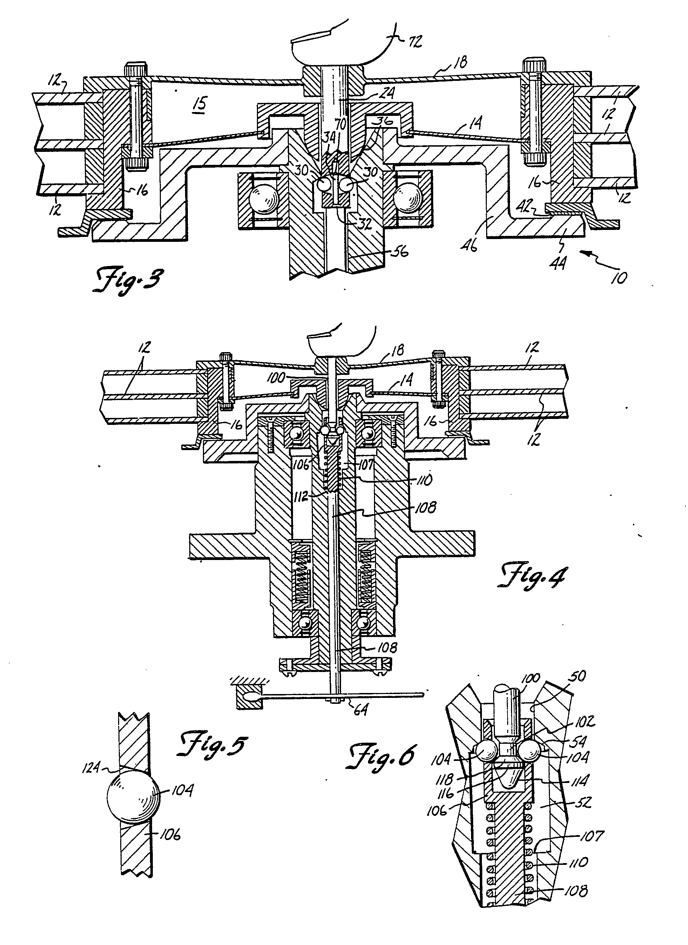

Mounted on the diaphragm 18 is a stub shaft 24. The stub shaft 24 extends through a central bore 26 in an alignment ball 36 of the locating diaphragm 14. The stub shaft 24 extends some distance past the locating diaphragm 14 to terminate in a hollow portion 32 having an open end. Mounted in the hollow portion 32 are steel balls 30. The balls are loosely mounted in the walls of the stub shaft 24 and are free to move laterally between a retracted position shown in Figure 2 and an extended position shown in Figure 3, but are captivated within the stub shaft.

The alignment ball 36 is mounted concentrically on the locating diaphragm 14 and has a bearing surface 38 which is preferably hemispherical in shape.

Also mounted on the hub 16 are three pads 42 which are designed to rest on a lateral flange 46 mounted on the spindle 20. The spindle 20, which is connected to a motor (not shown) of the disk drive by means (not shown) has at one end thereof a conical bearing surface 48 which acts as a corresponding alignment means to the alignment ball 36. The abutment of the bearing surface 38 against the bearing surface 48 of the spindle 20 causes the hub 16 to be concentrically aligned with the longitudinal central axis of the spindle 20, as may be seen in Figure 2. The bearing surface 38 bottoms out on the bearing surface 48 a short distance before the pads 42 bottom out on the flange 46. The locating diaphragm 14 thus deflects ensuring that the hub 16 is centred as the disk pack moves axially down onto the spindle 20.

At the apex of the bearing surface 48 is a narrow passageway 50 which is of a cross section slightly larger than the cross section of the stub shaft 24. The insertion of the stub shaft 24 into the passageway 50 causes the balls 30 to be pushed inwards into the interior of the stub shaft 24 to their retracted position, as illustrated in Figure 2.

Mounted in the interior of the passageway 50 is an annular groove 52, which has a slightly larger cross section than the passageway 50. When the stub shaft 24 is pressed inwards so that the balls 30 align with the annular groove 52, as illustrated in Figure 3, the balls 30 may move laterally outwards to their extended position by reason of the larger cross section of the annular groove 52.

The annular groove 52 has its top shoulder 54 slightly inclined for the purposes of imparting to the balls 30, from a position shown in Figure 3, an inwards biasing force when the stub shaft 24 is exerting an upwards force. This force comes from the stored energy in the diaphragm 18, as will be more fully explained hereafter. This inwards biasing force helps facilitate the movement of the balls 30 inwards to their retracted position, as shown in Figure 2 so that the stub shaft 24 may be withdrawn from the passageway 50.

The diaphragm 18 is not the only means of providing a restoring force. Other means of accomplishing this might be by providing a cluster spring arrangement around the outside of the stub shaft 24, or by any other equivalent restoring force means.

Also mounted in the interior of the spindle 20 is a push rod 34. The spindle 20 has a longitudinal coaxial bore 56 through which the push rod 34 extends. The push rod 34, in its nominal rest position (Figure 1) extends beyond the shaft 56, past the annular groove 52 and into the passageway 50. The push rod 34 has a biasing spring 58 mounted in the spindle 20, the spindle 58 biasing the push rod 34 in an outwards direction relative to the spindle 20. The spring 58 is captured between a base plate 60 mounted on the spindle 20 and a retainer 62 mounted on the push rod 34.

Mounted in a fixed position relative to spindle 20 is a pivotable lever 64 which, when pivoted, in a downwards direction catches on a retainer 66 of the push rod 34 to withdraw the push rod 34 in a downwards direction.

The cross section of the push rod 34 is broader than the gap between the balls 30 in their retracted position, as illustrated in Figure 2, but narrower than the gap between the balls 30 in extended position, as shown in Figure 3. Thus when the stub shaft 24 is inserted into the spindle 20 and the balls 30 are forced into their retracted position as shown in Figure 2, the balls abut against the top end of the push rod 34 as illustrated, and push the push rod 34 downwards a short distance. When, thereafter, the stub shaft 24 is pushed further downwards in the passageway 50 by an operator pressing on the top of the diaphragm 18, the balls 30 reach the wider annular groove 52. There the push rod 34 forces them to move laterally into the annular groove 52, as shown in Figure 3. The push rod then slides between (or pops up between) the balls 30, as shown in Figure 3, under the urging of the hair spring 58.

The top of the push rod 34 has an inclined annular surface 70. When the push rod 34 abuts against the balls 30 in their retracted position, the surface 70 tends to translate the outwards biasing force from the spring 58 into a lateral force on the balls 30, which, likewise, tends to force them into the wider cross section of the annular groove 52 when the balls 30 are registered therewith.

When the pads 42 are in contact with the flange 46, the nominal rest position of the balls will be as shown in Figure 2 just above the annular groove 52 in the passageway 50. The balls 30 will have pushed the push rod 34 downwards from its initial position, as shown in Figure 1, to the position shown in Figure 2. In the condition shown in Figure 2, the disk pack 10 is not yet connected to the spindle 20. The stub shaft 24 may still be withdrawn from the spindle 20 because the balls 30 are in their retracted position and will exert no inhibition to movement up the passageway 50. However, when a small amount of force is exerted on the top of the diaphragm 18, as illustrated by a thumb 72 (Figure 3), the diaphragm 18 deflects downwards a small distance, sufficient to bring the balls 30 into alignment or registration with the annular groove 52. The push rod 34 exerts a lateral force on the balls 30 urging them outwards into their extended position as shown in Figure 3. When the balls have moved into their extended position the push rod 34 is free to spring between the balls 30 as shown. At this point, the balls 30 are not free to move inwards because of the blocking presence of the push rod 34. Instead, they abut against the top shoulder 54 of the annular groove 52 and cannot be withdrawn up the passageway 50. The stub shaft 24 is locked into position and, likewise, so is the disk pack 10.

The diaphragm 18 remains slightly flexed when the balls 30 are captured in the annular groove 52. This flexure exerts a force upwards tending to pull the balls 30 against the top shoulder 54 of the annular groove 52. This force forcibly holds the pads 42 against corresponding friction surfaces 44 on the flange 46 such that rotational torque of the spindle 20 is translated to the disk pack 10. Likewise, the alignment ball 36 is held tightly against the bearing surface 48 for accurately centering the disk pack 10 on the spindle 20.

The disk pack 10 is disconnected from the spindle 20 by pressing the lever 64 downwards. The lever 64 catches on the retainer 66 and draws the push rod 34 downwards until the balls 30 are free to move inwards to their retracted position, as illustrated in Figure 2. The top shoulder 54 urges the balls inward. When they have reached their full inward position, the force of the diaphragm 18 upwards withdraws the stub shaft 24 into the position shown in Figure 2. The balls 30 cannot now move out outwards due to the retaining action of the passageway 50. The release of the lever 64 thus does not cause the relatching of the disk pack. The push rod 34 moves upwards upon release and abuts against the retracted balls 30 but it cannot push them aside.

The lever 64 is for purposes of illustration only and is not necessarily meant to be the only disconnecting means to be employed. A push button arrangement or an electrical means, such as a solenoid, may be preferable.

Figures 4, 5 and ·6 illustrate an alternative embodiment of apparatus according to the present invention for connecting a disk pack to a disk drive and whose essential features are unchanged in principle from the embodiment illustrated in Figures 1 to 3. Thus like parts in Figures 1 to 6 have been designated by the same reference numerals. In this alternative embodiment a stub shaft 100 does not carry the balls, but instead has an annular groove 102 for registration with steel balls 104 mounted on a slide member 106 which is slidably mounted in the annular groove 52. The slide member 106 is partially mounted in an alignment passageway 107 and axially movable therein. The slide member may be withdrawn axially downwards therealong by action of the lever 64 acting on a shaft 108 connected to the bottom of the slide member 106. A biasing spring 110 captured between a retaining wall 112 and the slide member 106 and disposed about the shaft 108, biases the slide member 106 upwards.

In operation, the depression of the diaphragm 18 causes the stub shaft 100 to abut against the top of the balls 104 and force them downwards against the resistance of the biasing spring 110. Inclined surfaces 114 at the top of the stub shaft 100 force the balls outwards along the top shoulder 54 and into the annular groove 52 gradually separating them. When the gap between the balls 104 is the same as the cross section of a wide portion 116 of the stub shaft 100, the biasing spring 110 forces the slide member 106 and the balls 104 upwards, past the obstruction of the wide portion 116 of the stub shaft. Movement of the slide member upwards causes the balls 104 to ride inwards under the action of the top shoulder 54 of the annular groove 52. The movement inwards causes the balls 105 to register with the annular groove 102.

Release of pressure on the diaphragm 18 at this point causes the stub shaft 100 to be urged upwards. The bottom portion of the annular groove 102 has an inclined surface 118. This surface 118 abuts against the balls 104 which, in turn, abut against the top shoulder 54. The direction of force from the abutment of these surfaces does not tend to force the balls 104 outwards and downwards along the top shoulder 54, but instead tends to maintain the balls 104 in registration with the annular groove 102. Thus the balls remain registered with the annular groove 102 and the stub shaft 100 cannot be withdrawn up the passageway 50.

The stub shaft 100 is released by depressing the lever 64 which draws the slide member 106 downwards. The withdrawal of the slide member 106 downwards, causes the balls 104 to move outwards into the annular groove 52 until the gap between the balls 104 is wide enough to allow the wide portion 116 of the stub shaft 100 to pass between them, whereupon, the force of the deflected diaphragm 18 causes the stub shaft 100 to move upwards. ·Release of the lever 64 at this point does not relock the disk pack. The balls move back up the top shoulder under the action of the biasing spring 110, but their inward movement is limited by frusto-conical holes 124 (Figure 5) in the slide member 106.

It will be appreciated that more than two steel balls may be conveniently used in both embodiments, although more than two are not essential.

**Claims**

1. An apparatus for connecting a disk pack (10) to a disk drive comprising: a hub (16) arranged to carry one or more disks (12); a stub shaft (24; 100) axially mounted on said hub; a member (20) having a passageway (50) at one end for receiving said stub shaft; an annular groove (52) in said passageway; recess means (32; 102) in said stub shaft having a shoulder; at least two balls (30; 104) movably disposed in relation to said member and said stub shaft and movable between a first position adapted to allow free movement of said stub shaft into and out of said passageway, and a second position adapted to capture said balls between the annular groove and the shoulder of the recess means to prevent said stub shaft from being withdrawn from said passageway; locking means (34; 106, 108) for urging said balls into said second position after said stub shaft has been inserted into said passageway to a predetermined extent, and for locking said balls in said second position against a force tending to withdraw said stub shaft from said passageway; and, moving means (64) for allowing said balls to move so that said stub shaft may be withdrawn from said passageway, characterised in that said member (20) is a spindle forming part of said disk drive, said annular groove (52) having a shoulder (54) so that in the second position the balls (30; 104) are captured between the shoulder of the annular force means (18) mounted on the hub and connected to said stub shaft for providing a force tending to withdraw said stub shaft from the spindle when said stub shaft extends into said passageway said predetermined extent, the arrangement being such that, in operation, after insertion of the spindle (20), the stub shaft (24; 100) is urged further into the passageway (50) by a force applied by an operator to the restoring force means (18) so that the balls (30; 104) reach the annular groove (52), the restoring force means remaining tensioned when the balls are in the second position, and the disk pack (10) is disconnected from the spindle by operation of the moving means (64) so that the force tending to withdraw the stub shaft from the spindle provided by the restoring force means causes the stub shaft to move to the first position.

2. An apparatus as claimed in claim 1 characterised in that said two balls (30) are mounted on said stub shaft (24) in at least two recesses and movable between a first position where said balls are substantially completely received in said recesses and a second position wherein said balls extend a substantial distance beyond the exterior of the stub shaft; said locking means comprising a shaft (34) axially movably mounted in a bore (56) of said spindle and extending into said passageway (50) to abut against said balls when said stub shaft is inserted into said passageway to said predetermined extent, said shaft (34) having a cross-section which is less than the gap between said balls in their second position, biasing means (58) being provided for biasing said shaft between said balls after they have moved into their second position, the shaft, in operation, acting to prevent movement of the balls from the second position to the first position to prevent the withdrawal of said stub shaft from said passageway, said moving means comprising means (64) for withdrawing said shaft (34) from between said balls.

3. An apparatus as claimed in claim 2 characterised in that the arrangement is such that said shoulder of the groove (52) causes the balls (30) to move from the second position to the first position under the action of the restoring force means.

4. An apparatus as claimed in claim 2 or 3 characterised in that the shaft (24) has an inclined annular surface (70) arranged to translate an axially inwards biasing force on said balls into a lateral outward force.

5. An apparatus as claimed in claim 1 characterised in that said recess means in said stub shaft (100) comprises an annular groove (102) having a shoulder (118), a slide member (106) being axially movable in said passageway (50) in said spindle, said slide member carrying said balls (104) so that they are laterally movable, said slide member (106) having a central passageway adapted to receive said stub shaft, first biasing means (110) for biasing said slide member towards said stub shaft, said shoulder (54) of said annular groove (52) of said passageway (50) being an inclined surface to bias said balls laterally inwards when said slide member biases said balls outwards, said stub shaft having a portion (116) with a first cross section and said annular groove (52) of said passageway (50) having a second cross section such that the difference between the two cross sections is large enough to allow said balls in the first position to move between them and thereby allow said stub shaft to move between said balls, said first biasing means (110) and said shoulder (54) of the annular groove (52) of said passageway (50) acting to force said balls to move laterally inwards to the second position to register with said annular groove (102) in the stub shaft (100) when said stub shaft is inserted to said predetermined extent and the annular groove is in alignment with said shoulder (54) of the annular groove (52) of said passageway (50) said shoulder (118) of the annular groove (102) in the stub shaft (100) constituting an inclined surface to translate axial inwards movement into a lateral outwards movement, the movement of said slide member (106) axially inwards moving said balls (104) laterally outwards until they reach said first position in said annular groove (52) of said passageway (50), the balls in their first position allowing said stub shaft to move past them and to be withdrawn from said passageway of the spindle.

6. An apparatus as claimed in claim 5 characterised in that the inclination of the respective inclined surfaces of shoulders (54 and 118) is such that the direction of force on said balls (104) caused by the inclined surfaces (54 and 118) in response to said restoring force means (18) tends to maintain said balls (104) captured between shoulders (54 and 118) rather than to force said balls (104) outwards away from the annular groove (102) of said stub shaft (100).

7. An apparatus as claimed in any preceding claim characterised by including alignment means comprising a locating ball (36) having a central bore (26) through which said stub shaft extends and concentric with the central axis of the hub and a conical bearing surface (48) mounted on and concentric with the axis of said spindle.

**Patentansprüche**

1. Vorrichtung zum Verbinden eines Plattenstapels (10) mit einem Plattenlaufwerk, mit einer Nabe (16), die zur Halterung einer oder mehrerer Platten (12) ausgebildet ist, mit einer Stummelwelle (24; 100), die in Axialrichtung auf der Nabe befestigt ist, mit einem Bauteil (20), das an einem Ende einen Kanal (50) zur Aufnahme der Stummelwelle aufweist, mit einer kreisringförmigen Nut (52) in dem Kanal, mit eine Schulter aufweisenden Ausnehmungsteilen (32; 102) in der Stummelwelle, mit zumindestens zwei Kugeln (30; 104), die beweglich gegenüber dem Bauteil und der Stummelwelle angeordnet sind und zwischen einer ersten Position, in der sie eine freie Bewegung der Stummelwelle in den Kanal und aus diesem heraus ermöglichen, und einer zweiten Stellung bewegbar sind, in der die Kugeln zwischen der kreisringförmigen Nut und der Schulter der Ausnehmungsteile eingefangen sind, um ein Herausziehen der Stummelwelle aus dem Kanal zu verhindern, mit Verriegelungseinrichtungen (34; 106, 108), die die Kugeln in die zweite Position pressen, nachdem die Stummelwelle bis zu einem vorgegebenen Ausmaß in den Kanal eingeschoben wurde, und die die Kugeln in der zweiten Position gegen eine Kraft verriegeln, die im Sinne eines Herausziehens der Stummelwelle aus dem Kanal wirkt, und mit Bewegungseinrichtungen (64), die eine Bewegung der Kugeln derart ermöglichen, daß die Stummelwelle aus dem Kanal herausgezogen werden kann, dadurch gekennzeichnet, daß das Bauteil (20) eine einen Teil des Plattenlaufwerks bildende Spindel ist, daß die kreisringförmige Nut (52) eine Schulter (54) derart aufweist, daß die Kugeln (30; 104) in der zweiten Position zwischen der Schulter der kreisringförmigen Nut und der Schulter der Ausnehmungsteile eingefangen sind, daß an der Nabe befestigte und mit der Stummelwelle verbundene Rückstellkraft-Einrichtungen (18) zur Lieferung einer Kraft vorgesehen sind, die im Sinne eines Herausziehens der Stummelwelle aus der Spindel wirkt, wenn sich die Stummelwelle in dem vorgegebenen Ausmaß in den Kanal hinein erstreckt, und daß die Anordnung derart ist, daß im Betrieb nach dem Einsetzen der Spindel (20) die Stummelwelle (24; 100) durch eine von einer Bedienungsperson auf die Rückstellkraft-Einrichtungen (18) ausgeübte Kraft weiter in den Kanal (50) hineingedrückt wird, so daß die Kugeln (30; 104) die kreisringförmige Nut (52) erreichen und die Rückstellkraft-Einrichtungen gespannt bleiben, wenn sich die Kugeln in der zweiten Stellung befinden, während der Plattenstapel (10) von der Spindel durch eine Betätigung der Bewegungseinrichtungen (64) getrennt wird, so daß die im Sinne eines Herausziehens der Stummelwelle aus der Spindel wirkende und von den Rückstellkraft-Einrichtungen gelieferte Kraft eine Bewegung der Stummelwelle in die erste Position hervorruft.

2. Vorrichtung nach Anspruch 1, dadurch gekennzeichnet, daß die zwei Kugeln (30) auf der Stummelwelle (24) in zumindestens zwei Ausnehmungen befestigt und zwischen einer ersten Position, in der die Kugeln im wesentlichen vollständig in den Ausnehmungen aufgenommen werden, und einer zweiten Stellung beweglich sind, in der sich die Kugeln über eine erhebliche Strecke aus dem Äußeren der Stummelwelle herauserstrecken, daß die Verriegelungseinrichtungen eine Welle (34) aufweisen, die in Axialrichtung in einer Bohrung (56) der Spindel beweglich befestigt sind und sich in den Kanal (50) hinein erstrecken, um gegen die Kugeln zur Anlage zu kommen, wenn die Stummelwelle in den Kanal bis zu dem vorgegebenen Ausmaß hineingeschoben ist, daß die Welle (34) einen Querschnitt aufweist, der kleiner als der Spalt zwischen den Kugeln in deren zweiter Position ist, daß Vorspanneinrichtungen (58) zur Vorspannung der Welle zwischen die Kugeln nach deren Bewegung in die zweite Position vorgesehen sind, daß die Welle im Betrieb eine Bewegung der Kugeln von der zweiten Position in die erste Position verhindert, um das Herausziehen der Stummelwelle aus dem Kanal zu verhindern, und daß die Bewegungseinrichtungen Einrichtungen (64) zum Herausziehen der Welle (34) aus der Position zwischen den Kugeln aufweisen.

3. Vorrichtung nach Anspruch 2, dadurch gekennzeichnet, daß die Anordnung derart ist, daß die Schulter der Nut (52) eine Bewegung der Kugeln (30) von der zweiten Position in die erste Position unter der Wirkung der Rückstellkraft-Einrichtungen bewirkt.

4. Vorrichtung nach Anspruch 2 oder 3, dadurch gekennzeichnet, daß die Welle (24) eine geneigte kreisringförmige Oberfläche (70) aufweist, die so angeordnet ist, daß eine in Axialrichtung nach innen gerichtete Vorspannkraft auf die Kugeln in eine seitlich nach außen gerichtete Kraft umgesetzt wird.

5. Vorrichtung nach Anspruch 1, dadurch gekennzeichnet, daß die Ausnehmungsteile in der Stummelwelle (100) eine kreisringförmige Nut (102) mit einer Schulter (118) aufweisen, daß ein Schieberteil (106) in Axialrichtung in dem Kanal (50) in der Spindel beweglich ist, daß das Shieberteil die Kugeln (104) derart trägt, daß sie in seitlicher Richtung beweglich sind, daß das Schieberteil (106) einen zentralen Kanal zur Aufnahme der Stummelwelle und erste Vorspanneinrichtungen (110) zum Vorspannen des Schieberteils in Richtung auf die Stummelwelle aufweist, daß die Schulter (54) der kreisringförmigen Nut (52) des Kanals (50) eine geneigte Oberfläche zur Vorspannung der Kugeln in seitlicher Richtung nach innen ist, wenn das Schieberteil die Kugeln nach außen vorspannt, daß die Stummelwelle einen Abschnitt (116) mit einem ersten Querschnitt aufweist, während die kreisringförmige Nut (52) des Kanals (50) einen zweiten Querschnitt derart aufweist, daß die Differenz zwischen den beiden Querschnitten groß genug ist, daß sich die Kugeln in der ersten Position zwischen diesen Teilen bewegen können, so daß eine Bewegung der Stummelwelle zwischen den Kugeln ermöglicht wird, daß die ersten Vorspanneinrichtungen (110) und die Schulter (54) der kreisringförmigen Nut (52) des Kanals (50) eine Bewegung der Kugeln in seitlicher Richtung nach innen zur zweiten Position in eine Ausrichtung mit der kreisringförmigen Nut (102) in der Stummelwelle (100) bewirken, wenn die Stummelwelle bis zu dem vorgegebenen Ausmaß eingeschoben ist und die kreisringförmige Nut in Ausrichtung mit der Schulter (54) der kreisringförmigen Nut (52) des Kanals (50) ist, daß die Schulter (118) der kreisringförmigen Nut (102) der Stummelwelle (100) eine geneigte Oberfläche bildet, die eine axial nach innen gerichtete Bewegung in eine seitlich nach außen gerichtete Bewegung umsetzt, daß die Bewegung des Schieberteils (106) in Axialrichtung nach innen die Kugeln (104) in seitlicher Richtung nach außen bewegt, bis sie die erste Position in der kreisringförmigen Nut (52) des Kanals (50) erreichen, und daß die Kugeln in ihrer ersten Position eine Vorbeibewegung der Stummelwelle an ihnen und ein Herausziehen der Stummelwelle aus dem Kanal der Spindel ermöglichen.

6. Vorrichtung nach Anspruch 5, dadurch gekennzeichnet, daß die Neigung der jeweiligen geneigten Oberflächen der Schultern (54 und 118) derart ist, daß die Richtung der Kraft auf die Kugeln (104), die durch die geneigten Oberflächen (54 und 118) in Abhängigkeit von den Rückstellkraft-Einrichtungen (118) hervorgerufen wird, im Sinne eines Festhaltens der Kugeln (104) in eingefangenem Zustand zwischen den Schultern (54 und 118) wirkt anstelle die Kugeln (104) nach außen aus der kreisringförmigen Nut (102) der Stummelwelle (100) herauszudrücken.

7. Vorrichtung nach einem der vorhergehenden Ansprüche, gekennzeichnet durch den Einschluß von Ausrichteinrichtungen, die eine Lagefestlegungskugel (36) mit einer Mittelbohrung (26), durch die sich die Stummelwelle erstreckt und die konzentrisch zur Mittelachse der Narbe ist, und eine konische Lageroberfläche (48) aufweisen, die auf der Spindel konzentrisch zur Achse der Spindel befestigt ist.

**Revendications**

1. Appareil de raccordement d'un chargeur (10) de disques à une unité de disques, comprenant un moyeu (16) destiné à porter un ou plusieurs disques (12), un arbre rectiligne (24; 100) monté axialement sur le moyeu, un organe (20) ayant un passage (50) formé à une première extrémité pour le logement de l'arbre, une gorge annulaire (52) formée dans le passage, un dispositif (32; 102) délimitant des cavités dans l'arbre et ayant un épaulement, au moins deux billes (30; 104) disposées afin qu'elles soient mobiles par rapport audit organe et à l'arbre entre une première position dans laquelle elles permettent un déplacement libre de l'arbre dans le passage et hors de celui-ci, et une seconde position dans laquelle les billes sont coincées entre la gorge annulaire et l'épaulement du dispositif formant une cavité afin que l'arbre ne puisse pas être retiré du passage, un dispositif de verrouillage (34; 106, 108) destiné à repousser les billes vers la seconde position après que l'arbre a été introduit dans le passage sur une distance prédéterminée, et à verrouiller les billes dans la seconde position malgré une force tendant à retirer l'arbre hors du passage, et un dispositif (64) de déplacement destiné à permettre le déplacement des billes de manière que l'arbre puisse être retiré du passage, caractérisé en ce que ledit organe (20) est une broche faisant partie de l'unité de disques, la gorge annulaire (52) ayant un épaulement (54) tel que, dans la seconde position, les billes (30; 104) sont coincées entre l'épaulement de la gorge et l'épaulement du dispositif formant une cavité, et un dispositif (18) destiné à appliquer une force de rétablissement, monté sur le moyeu et raccordé à l'arbre est destiné à exercer une force tendant à retirer l'arbre du moyeu lorsque l'arbre est disposé dans le passage à la distance prédéterminée, l'arrangement étant tel que, lors du fonctionnement, après introduction de la broche (20), l'arbre (24; 100) est repoussé plus loin dans le passage (50) par une force appliquée par un opérateur sur le dispositif (18) d'application d'une force de rétablissement si bien que les billes (30; 104) atteignent la gorge annulaire (52), le dispositif d'application d'une force de rétablissement restant sous tension lorsque les billes se trouvent dans la seconde position, et le chargeur (10) est séparé de la broche par manœuvre du dispositif de déplacement (64), si bien que la force tendant à retirer l'arbre de la broche, exercée par le dispositif d'application d'une force de rétablissement, provoque le déplacement de l'arbre vers la première position.

2. Appareil selon la revendication 1, caractérisé en ce que les deux billes (30) sont montées sur l'arbre (24) dans au moins deux cavités et sont mobiles entre une première position dans laquelle les billes sont pratiquement logées en totalité dans les cavités et une seconde position dans laquelle les billes dépassent d'une distance importante à l'extérieur de l'arbre, le dispositif de verrouillage comprenant un arbre (34) mobile axialement dans un trou (56) de la broche et pénétrant dans ledit passage (50) afin qu'il soit en butée contre les billes lorsque l'arbre rectiligne est introduit dans le passage à la distance prédéterminée, ce second arbre (34) ayant une section inférieure à la distance comprise entre les billes lorsqu'elles sont dans leur seconde position, un dispositif de rappel (58) étant destiné à repousser l'arbre entre les billes lorsqu'elles ont été déplacées dans leur seconde position, l'arbre, lors du fonctionnement, empêchant le déplacement des billes de la seconde position vers la première afin qu'il empêche le retrait de l'arbre rectiligne hors du passage, le dispositif de déplacement comprenant un dispositif (64) destiné à retirer l'arbre (34) de l'espace compris entre les billes.

3. Appareil selon la revendication 2, caractérisé en ce que l'arrangement est tel que l'épaulement de la gorge (52) provoque un déplacement des billes (30) de la seconde position vers la première sous l'action du dispositif d'application d'une force de rétablissement.

4. Appareil selon l'une des revendications 2 et 3, caractérisé en ce que l'arbre rectiligne (24) a une·surface annulaire inclinée (70) destinée à transformer une force de rappel axiale vers l'intérieur appliquée aux billes en une force latérale dirigée vers l'extérieur.

5. Appareil selon la revendication 1, caractérisé en ce que le dispositif formant des cavités dans l'arbre rectiligne (100) comporte une gorge annulaire (102) ayant un épaulement (118), un organe coulissant (106) étant mobile axialement dans le passage (50) formé dans la broche, l'organe coulissant portant les billes (104) afin qu'elles soient mobiles latéralement, l'organe coulissant (106) ayant un passage central destiné à loger l'arbre rectiligne, un premier dispositif (110) de rappel de l'organe coulissant vers l'arbre rectiligne, l'épaulement (54) de la gorge annulaire (52) dudit passage (50) formant une surface inclinée destinée à repousser les billes latéralement vers l'intérieur lorsque l'organe coulissant repousse les billes vers l'extérieur, l'arbre rectiligne ayant une partie (116) qui a une première section et la gorge annulaire (52) du passage (50) ayant une seconde section telle que la différence entre les deux sections est suffisamment grande pour que les billes qui se trouvent dans la première position puissent se déplacer entre elles et puissent ainsi permettre à l'arbre rectiligne de se déplacer entre les billes, le premier dispositif de rappel (110) et l'épaulement (54) de la gorge annulaire (52) dudit passage (50) obligeant les billes à se déplacer latéralement vers l'intérieur, vers la seconde position, en face de la gorge annulaire (102) formée dans l'arbre rectiligne (100) lorsque ce dernier est introduit à la distance prédéterminée, et lorsque la gorge annulaire se trouve en face de l'épaulement (54) de la gorge annulaire (52) dudit passage (50), l'épaulement (118) de la gorge annulaire (102) de l'arbre rectiligne (100) constituant une surface inclinée destinée à transformer un déplacement axial vers l'intérieur en un déplacement latéral vers l'extérieur, le déplacement de l'organe coulissant (106) en direction axiale vers l'intérieur provoquant un déplacement latéral vers l'extérieur des billes (104) jusqu'à ce que celles-ci atteignent leur première position dans la gorge annulaire (52) dudit passage (50), les billes, se trouvant dans leur première position, permettant le passage de l'arbre rectiligne à leur niveau et son retrait du passage formé dans la broche.

6. Appareil selon la revendication 5, caractérisé en ce que l'inclinaison des surfaces inclinées respectives des épaulements (54 et 118) est telle que la direction de la force exercée sur les billes (104) du fait de la présence des surfaces inclinées (54 et 118) et sous l'action du dispositif (18) d'application d'une force de rétablissement a tendance à maintenir les billes (104) coincées entre les épaulements (54 et 118) plutôt qu'à chasser les billes (104) vers l'extérieur à distance de la gorge annulaire (102) de l'arbre rectiligne (100).

7. Appareil selon l'une quelconque des revendications précédentes, caractérisé en ce qu'il comporte un dispositif d'alignement comprenant une rotule de positionnement (36) ayant un trou central (26) par lequel passe l'arbre rectiligne et qui est concentrique à l'axe central du moyeu, et une surface conique (48) d'appui formée sur l'axe de la broche et concentrique à celle-ci.

**0 056 296**

Fig.1

Fig.2

*Fig. 3*

*Fig. 4*

*Fig. 5*

*Fig. 6*